(19) Europäisches Patentamt
European Patent Office
Office européen des brevets

(11) Publication number: **0 252 533 B1**

(12) **EUROPEAN PATENT SPECIFICATION**

(45) Date of publication of the patent specification: **29.08.90**

(51) Int. Cl.[5]: **C10M 173/02**, C10M 105/22, C10M 105/58

(21) Application number: **87200868.5**

(22) Date of filing: **12.05.87**

(54) **A method in the mechanical working of aluminium and aluminium alloys in the presence of a cooling lubricant, and a concentrate of the cooling lubricant.**

(30) Priority: **13.05.86 SE 8602236**

(43) Date of publication of application: **13.01.88 Bulletin 88/2**

(45) Publication of the grant of the patent: **29.08.90 Bulletin 90/35**

(84) Designated Contracting States: **AT BE CH DE ES FR GB GR IT LI LU NL SE**

(56) References cited:
EP-A- 0 115 926
EP-A- 0 192 358
EP-A- 0 206 833
US-A- 3 006 849
US-A- 3 374 171
US-A- 4 243 537
US-A- 4 259 206

(73) Proprietor: **Berol (Suisse) S.A., 56 Grand-Rue, CH-1700 Fribourg(CH)**

(72) Inventor: **Sandberg, Elina, Lunden 13961, S-444 05 Ödsmal(SE)**
Inventor: **Sköld, Rolf, Dragonvägen 11, S-444 00 Stenungsund(SE)**

(74) Representative: **Andersson, Rolf, BEROL KEMI AB Box 851, S-444 01 Stenungsund(SE)**

EP 0 252 533 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method in the mechanical working of aluminium and aluminium alloys in the presence of a water-based cooling lubricant, and to a concentrate which, after dilution with water, may be used as cooling lubricant. The invention has been developed especially for the cold rolling.

Normally, kerosene-based cooling lubricants are used for cold rolling of aluminium. However, the use of kerosene-based cooling lubricants has been found to entail a number of disadvantages, among which may be mentioned high emission of hydrocarbons, considerable fire hazard and limited cooling effect. The poor cooling effect causes undesired restrictions in production capacity.

It has therefor been proposed to replace the kerosene-based cooling lubricants by water-based emulsions containing specific additives which reduce corrosion and/or the friction between the metal surface and the working tool, especially at high pressures. Such water-based systems are disclosed in, inter alia, US patent specification 4 243 537 and European patent application 115 926, and they contain as lubricating and corrosion inhibiting agents a mixture of an alkanol amine, a carboxylic acid, and a polyoxyalkylene polymer. In US Patent Specification No. 3 374 171 similar lubricant compositions are disclosed for use in metal working, e.g. in the machining of iron. Reference is made to copending EP-A 0 252 534 which describes a method in the mechanical working of aluminium or aluminium alloys in the presence of a waterbased cooling lubricant containing lubricating and corrosion inhibiting agents, characterised in that the cooling lubricant at least at a temperature within the range 20–70°C is present in the form of a stable solution, with the disclaimer that it is free of any watersoluble organic solubilizer having a molecular weight of less than 400 and a maximum hydrophobic group of 6 carbon atoms, and also characterised in that it contains, as lubricating and corrosion inhibiting agents, a combination of (a) a carboxyl compound having the formula $R_1COOH$, in which $R_1$ is hydrophobic group having 7–14 carbon atoms, and (b) a tertiary amine having a molecular weight of less than 300 and exhibiting at least one alkyl substituent and at least one hydroxyl group containing substituent, the base/acid equivalent ratio between the amine and carboxyl compound being less than 1.0.

In spite of the obvious advantages provided by waterbased cooling lubricant systems, they have not found widespread use in the rolling of aluminium or aluminium alloys because such systems, with low contents of lubricating and corrosion inhibiting agents, cause water stains on the metal surfaces, poor lubrication and/or insufficient corrosion protection of the working tools. Water staining, so called white rust, of the aluminium metal surfaces is primarily due to the fact that the components included in the cooling lubricant provide insufficient corrosion protection for aluminium. Although, admittedly, the lubrication and corrosion protection are improved if the content of lubricant and corrosion inhibitor is increased, there is obtained during the subsequent heat treatment a disagreeable staining which is due to the fact that the components of the cooling lubricant have been converted and burned into the metal surfaces.

Another problem that is difficult to master in rolling work is that roll marks and other physical damage may occur in the rolled metal surface because metal is torn from the billet which is being rolled, and is welded to the rolls. The resulting irregularities may, upon continued rolling, cause physical damage to the rolled metal surface.

It has now been found possible to effect cold or hot rolling of aluminium or aluminium alloys so that satisfactory lubrication and low corrosion are obtained without any disagreeable staining of the metal surface during subsequent heat treatment. This is achieved, according to the present invention, in that the mechanical working is effected in the presence of a water-based cooling lubricant in the form a stable solution, at least at a temperature within the range of 20–70°C, and containing (a) a carboxyl compound having the formula $R_1COOH$, in which $R_1$ is a hydrophobic group having 7–22 carbon atoms, and (b) an tertiary alkyl alkanol amine having a molecular weight of less than 300, and (c) a water-soluble, organic solubiliser having a molecular weight of less than 400 and a maximum hydrocarbon group of 6 carbon atoms, the base/acid equivalent ratio between the amine and the carboxyl compound being less than 1.0, preferably less than 0.9. By stable solution is meant in the context of this invention a solution which does not within a foreseeable period of time, i.e. during at least one month, separate into two or more phases.

It is of essential importance that the base/acid equivalent ratio is less than 1.0, preferably less than 0.9, most preferably between 0.5-0.8 in order to obtain good lubrication properties. The EP application 115.926 and US Patent Specification 3 374 171 only discloses embodiments where the equivalent ratio is well above 10. In the US Patent Specification 3 374 171 water soluble alkanolamines, such as triethanolamine, are used in a metal working fluid as a corrosion inhibiting agent, in which the carboxylic acid is soluble and forms the corresponding salt. In addition to the function as an inhibitor the alkanolamines also have the task of forming residue upon machinery parts. This means that the alkanolamines have to be present in larger molar amounts than the carboxylic acid. According to the invention all residues on the aluminium surface have to be minimized in order to avoid the formation of annealing residues. This is achieved by using the tertiary alkylalkanolamine in such an amount that the base/acid equivalent ratio is less than 1.0. The equivalent ratio of the invention results in a cooling lubricant that normally has a pH-value less than 8. In air the aluminium surface is oxidized and obtains an isoelectric point a pH-value of about 8,5–9. Thus, the process of the invention is carried out on the acid side of the isoelectric point.

The choice of amine compound is also essential. The tertiary alkylalkanolamines according to the invention contribute both to the formation of a solution and to the corrosion inhibiting properties without

causing annealing residues. When the compositions disclosed in the US Patent Specification 4 243 537 is used in aluminium rolling tests, the aluminium sheets obtained exhibit physical damages as well as unacceptable annealing residues including miscolouring. It has been found that these results at least partly depends on the use of triethanolamine.

Practical tests have shown that it is of great importance to the rolling characteristics that the cooling lubricant is present in the form of a stable solution, and not not as an emulsion. Presumably, the kinetics in the stable solution according to the invention are promoted such that the metal surfaces quickly obtain a homogeneous and well covering protective layer of the carboxyl and the tertiary alkyl alkanol amine, whereby the formation of local deposits and excess which, during the subsequent heat treatment, may cause staining, is counteracted. A further essential advantage is that physical damage to the rolled surfaces can be avoided.

A further essential advantage of the cooling lubricant according to the invention is that it is easy to filter in order to remove impurities formed during working. The cooling lubricant may then be reused without any appreciable risk of soiling, metal-catalysed oxidative degradation, or microbial degradation.

In addition to the carboxyl compound (a), alkanol amine (b), and the solubiliser (c) the cooling lubricant may contain (d) a polar, predominantly hydrophobic, nonionic compound in order to further improve lubrication.

The hydrophobic group $R_1$ of the carboxyl compound is preferably derived from straight saturated aliphatic compounds, although branched unsaturated aliphatic groups are also useful. Especially preferred groups are alkyl groups containing 8–17 carbon atoms. Specific examples of suitable carboxylic acids are pelargonic acid, decanoic acid, lauric acid, palmitic acid, stearic acid, oleic acid, and coconut fatty acids as well as mixtures thereof.

The hydrophobic group $R_1$ may also contain heteroatoms, such as oxygen, sulphur and nitrogen which are included in such functional groups as ether, thioether, ester, hydroxyl, carboxyl, and amide groups. Examples of such carboxyl compound are

$R_7OCH_2COOH$;  $R_7OC_2H_4COOH$

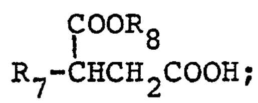;  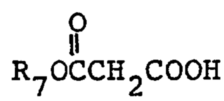

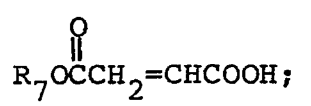;  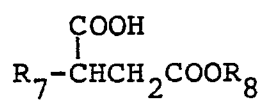

wherein $R_8$ is an alkyl having 1–4 carbon atoms, or hydrogen, and $R_7$ is a hydrocarbon group, preferably an aliphatic hydrocarbon group, $R_7$ and $R_8$ being selected such that the meaning of $R_1$ is satisfied.

The tertiary alkylalkanolamine (b) contains at least one substituent with a hydroxyl group. It will therefore be water-soluble or capable of forming micelles. Preferred tertiary alkylalkanolamines (b) are having the formula $R_2R_3R_4N$, wherein $R_2$ is a hydroxyalkyl group having 1–4 carbon atoms or a group of formula $(A)_nH$, wherein A is an alkyleneoxy group having 2-4 carbon atoms, and n is an integer from 1 to 3, $R_3$ is an alkyl group having 1–6 carbon atoms, and $R_4$ represents a group having the same meaning as $R_2$ and $R_3$. Examples of suitable tertiary alkylalkanolamines are diethanol ethyl amine, diethanol propyl amine, diethanol butyl amine, diethanol pentyl amine, diethanol hexyl amine and the corresponding dipropanol amines, and ethanol diethyl amine, ethanol dipropyl amine, ethanol dibutyl amine and the corresponding propanol amines. The above mentioned compounds may also be alkoxylated with ethylene oxide, propylene oxide and/or butylene oxide.

Usually, the amount of the carboxylic compound and the alkanol amine is selected in such a way that the base/acid equivalent ratio will be 0.5–.0.9, which normally results in a cooling lubricant having a pH of about 6–8. A deficiency in the alkanol amine in relation to the carboxyl compound has been shown to improve the lubricating effect. If priority is given to good lubrication, it is advisable to select a base/acid equivalent ratio between the alkanol amine and the carboxyl compound of from 0.5 up to 0.8.

The solubiliser (c) is a water-soluble low-molecular compound having polar groups, such as hydroxyl groups and ether groups. Preferably, the molecular weight is below 250. Examples of such compounds are ethers of ethylene glycol, such as mono- or dibutyl ethylene glycol, mono- or dipropyl etylene glycol, mono- or diethyl ethylene glycol, or the corresponding mono- or dicompounds of diethylene glycol, triethylene glycol, and alcohols, such as pentol, butanol, propanol, and isopropanol. Of the above mentioned solubilisers, monoethers of mono- or diethylene glycol are preferred.

The nonionic compound (d) which primarily contributes to the lubricating effect of the cooling lubricant must be predominantly hydrophobic in character. By this is meant that it should have a HLB value of less

than 10, preferably less than 9, such nonionic compounds being preferred as are essentially insoluble in water. Suitable compounds (d) are those having the formula $R_5(B)_mOR_6$, wherein $R_5$ is a hydrocarbon or acyl group having 8–24 carbon atoms, B represents an oxyalkylene group having 2–4 carbon atoms, $R_6$ is hydrogen, an alkyl or acyl group having 1–4 carbon atoms, and m is an integer from 0 to 4.

The nonionic compound (d) may be both aromatic and aliphatic, but the aliphatic compounds are preferred. Examples of preferred nonionic compounds are hydroxyl compounds, such as octanol, decanol, dodecanol, tetradecanol, hexadecanol, oxo alcohols having 9–17 carbon atoms, nonyl phenol, octyl phenol, and dodecyl phenol, as well as ethoxylates of the above mentioned alcohols with 1–4 moles of ethylene oxide per mole of hydroxyl compound. These hydroxyl compounds may be summarised by the general formula $R_5(B)_mOH$ wherein $R_5$, B, and m have the meanings indicated above.

Other examples of nonionic compounds are fatty acids, alkoxylated or esterified with the compound $H(B)_mOR_6$ wherein B, $R_6$, and m have the meaning indicated above. Specific examples of this type of compounds are

$C_{11}H_{21}COOC_2H_4OH$; $C_{11}H_{23}COOCH_3$; $C_9H_{19}CO(OC_2H_4)_2OCH_3$

Preferred ester compounds are those having the general formula $R_5OR_6$ wherein $R_5$ is an acyl group having 8–24 carbon atoms, and $R_6$ is an alkyl group having 1–4 carbon atoms.

In addition to the above mentioned components the water-based cooling lubricant according to the invention may also contain conventional additives, such as bactericidal agents, antifoam additives, viscosity controlling agents, perfumes and additional agents capable of supplementing lubrication and corrosion protection. Examples of additional agents improving the lubrication are polymers based on ethylene oxide and higher alkylene oxides. The alkylene oxides may be both random coupled and coupled in blocks.

In preparing the cooling lubricant according to the invention, it is preferred first to prepare a concentrate which suitably may contain the following components.

| Component | Content, % by weight |
|---|---|
| Carboxyl compound | 15–75, preferably 20–45 |
| Tertiary alkylalkanolamine | 3–60, preferably 10–45 |
| Solubiliser | 10–87, preferably 10–68 |
| Nonionic compound | 0–30, preferably 2–30 |
| Bactericidal agents, perfumes, viscosity controlling agents etc. | 0–35, preferably 0–15 |
| Water | 0–72, preferably 0–58 |

After diluting the concentrate with water, a cooling lubricant is obtained which is ready for use. A suitable composition is as follows.

| Component | Content, % by weight |
|---|---|
| Carboxyl compound | 0.5–25, preferably 2–15 |
| Tertiary alkylalkanolamine | 0.1–20, preferably 1–15 |
| Solubiliser | 0.5–33, preferably 1–18 |
| Nonionic compound | 0.0–10, preferably 0.2–10 |
| Conventional additives, such as bactericidal agents, perfumes, viscosity controlling agents etc. | 0–5, preferably 0.1–15 |
| Water | 25–98.9, preferably 40–95.7 |

The solution ready for use preferably has a water content within the range 70–95% by weight.

The invention is further illustrated by the following Example.

Example

Cold rolling of annealed aluminium sheet of grade AA3004 was carried out in a single stand with rolls having a diameter of 159 mm in the presence of any one of the cooling lubricants mentioned below. During rolling, the sheet thickness was reduced from 1.05 mm to 0.63 mm. The requisite rolling force was determined as the pressure in the hydraulic system transferring the compressive force to the rolls. After rolling, the surfaces were judged visually with respect to physical damage on a scale from 0 to 1. The value 0 designates a surface which is up to standard, i.e. a surface essentially free from physical damage, while

1 designates a surface not up to standard, i.e. a surface with visible physical damage. The rolled aluminium sheets were wiped clean and supplied with cooling lubricant in adundance, whereupon they were heated to 360°C for five hours in air. The appearance after heating was judged visually on a scale from 0 to 4 with respect to, on the one hand, the degree of blackening and, on the other hand, the proportion of stained surface.

| Scale, point | Degree of colour | Stained surface, % |
|---|---|---|
| 0 | Perfect 10 colour | 0 |
| 1 | Discernible Colour shade | 1–5 |
| 2 | Slight colour shade | 6–15 |
| 3 | Distinct colour shade | 16–50 |
| 4 | Strong colour shade | 51–100 |

The points of the degree of colour and stained surface were summed up to a total assessment under the concept annealing residues. Points 0–1 are excellent, points 2–3 are well up to standard, points 4–5 are just up to standard, and points 6–8 are below standard. By "just up to standard" is meant that the aluminium sheets from annealing residues point of view would just be commericially acceptable.

In order to determine the corrosive effect of the cooling lubricant upon iron, cast-iron ships were placed for 24 hours on a filter paper that had been soaked with a specific amount of the cooling lubricant, whereupon a grid having 126 intersections on an area of 1500 square cm was placed over the filter paper, and the occurance oi corrosion was determined for each point of intersection on the grid. The iron corrosion was then expressed as the number of intersecting points with rust in relation to the total number of intersecting points.

White rust was determined by coating aluminium sheets with the cooling lubricant and then stacking the sheets and cooling them for 1 hour at –20°C, whereupon they were exposed for 2 hours to humid air of room temperature. After that, the sheets were heated to 80°C for 10 hours. The white rust was then assessed in the same manner as the iron corrosion.

From essentially anhydrous concentrates, the following cooling lubricants according to the invention were prepared and used for the cold rolling in this Example. All cooling lubricants were in the form of a stable solution at 20°C.

Cooling lubricant 1

| Component: | Content, % by weight: |
|---|---|
| Lauric acid | 3.2 |
| $C_4H_9N(C_2H_4OH)_2$ | 1.5 |
| $C_{14}H_{29}O(C_2H_4O)_2H$ | 0.7 |
| Butyl diethylene glycol | 9.0 |
| Water | balance |
| Base/acid equivalent ratio | 0.58 |

Cooling lubricant 2

| Component: | Content, % by weight: |
|---|---|
| Pelargonic acid | 6.0 |
| $C_4H_9N(C_2H_4OH)_2$ | 3.5 |
| $C_{12-14}H_{25-29}O(C_2H_4O)_2H$ | 1.5 |
| Butyl diethylene glycol | 3.6 |
| Water | balance |
| Base/acid equivalent ratio | 0.57 |

| Cooling lubricant 3 | |
|---|---|
| Component: | Content, % by weight: |
| Lauric acid | 6.0 |
| $C_4H_9N(C_2H_4OH)_2$ | 4.3 |
| $C_{12-14}H_{25-29}O(C_2H_4O)_2H$ | 1.5 |
| Butyl diethylene glycol | 4.4 |
| Water | balance |
| Base/acid equivalent ratio | 0.70 |

| Cooling lubricant 4 | |
|---|---|
| Component: | Content, % by weight: |
| Lauric acid | 6.0 |
| $C_4H_9N(C_2H_4OH)_2$ | 3.9 |
| $C_{12-14}H_{25-29}O(C_2H_4O)_2H$ | 1.5 |
| Butyl diethylene glycol | 2.7 |
| Water | balance |
| Base/acid equivalent ratio | 0.81 |

| Cooling lubricant 5 | |
|---|---|
| Component: | Content, % by weight: |
| Lauric acid | 8.0 |
| $C_4H_9N(C_2H_4OH)_2$ | 4.5 |
| $C_{12-14}H_{25-29}O(C_2H_4O)_2H$ | 1.3 |
| Butyl diethylene glycol | 6.7 |
| Water | balance |
| Base/acid equivalent ratio | 0.70 |

| Cooling lubricant 6 | |
|---|---|
| Component: | Content, % by weight: |
| Lauric acid | 6.7 |
| $C_4H_9N(C_2H_4OH)_2$ | 3.8 |
| $C_{12-14}H_{25-29}OH$ | 1.7 |
| Butyl diethylene glycol | 7.8 |
| Water | balance |
| Base/acid equivalent ratio | 0.70 |

| Cooling lubricant 7 | |
|---|---|
| Component: | Content, % by weight: |
| Lauric acid | 6.7 |
| $C_4H_9N(C_2H_4OH)_2$ | 3.7 |
| $C_{11}H_{23}COOCH_3$ | 1.7 |
| Butyl diethylene glycol | 8.0 |
| Water | balance |
| Base/acid equivalent ratio | 0.69 |

| Cooling lubricant 8 | |
|---|---|
| Component: | Content, % by weight: |
| $C_{11}H_{23}COOH$ (branched) | 6.0 |
| $C_4H_9N(C_2H_4OH)_2$ | 3.0 |
| $C_{12}H_{25}O(C_2H_4O)_2H$ | 1.0 |
| Butyl diethylene glycol | 5.9 |
| Water | balance |
| Base/acid equivalent ratio | 0.62 |

| Cooling lubricant 9 | |
|---|---|
| Component: | Content, % by weight: |
| Lauric acid | 6.0 |
| $C_4H_9N(C_2H_4OH)_2$ | 3.4 |
| $C_{14}H_{29}O(C_2H_4OH)_2$ | 1.0 |
| Butyl diethylene glycol | 3.8 |
| Water | balance |
| Base/acid equivalent ratio | 0.70 |

| Cooling lubricant 10 | |
|---|---|
| Component: | Content, % by weight: |
| Lauric acid | 6.7 |
| Diethylene ethanol amine + EO | 3.8 |
| $C_{12-14}H_{25-29}OH$ | 1.4 |
| Butyl diethylene glycol | 8.2 |
| Water | balance |
| Base/acid equivalent ratio | 0.70 |

| Cooling lubricant 11 | |
|---|---|
| Component: | Content, % by weight: |
| Lauric acid | 4.0 |
| Butyl diethanol amine | 2.7 |
| Methyl laurate | 1.0 |
| Pentyl diethylene glycol | 4.8 |
| Water | balance |
| Base/acid equivalent ratio | 0.84 |

| Cooling lubricant 12 | |
|---|---|
| Component: | Content, % by weight: |
| Lauric acid | 6.9 |
| Butyl diethanol amine | 3.9 |
| $C_{12-14}H_{25-29}OH$ | 1.4 |
| Pentyl diethylene glycol | 7.9 |
| Water | balance |
| Base/acid equivalent ratio | 0.70 |

| Cooling lubricant 13 | |
|---|---|
| Component: | Content, % by weight: |
| Pelargonic acid | 7.4 |
| $C_{12-14}H_{25-29}OH$ | 0.9 |
| 2,2-Dimethylamino methyl propanol | 3.6 |
| Butyl diethylene glycol | 5.0 |
| Water | balance |
| Base/acid equivalent ratio | 0.67 |

| Cooling lubricant 14 | |
|---|---|
| Component: | Content, % by weight: |
| Lauric acid | 6.2 |
| 2,2-Dimethylamino methal propanol | 2.5 |
| Butyl diethylene glycol | 7.1 |
| $C_{12-14}H_{25-29}OH$ | 1.2 |
| Water | balance |
| Base/acid equivalent ratio | 0.69 |

| Cooling lubricant 15 | |
|---|---|
| Component: | Content, % by weight: |
| Lauric acid | 8.21 |
| $C_4H_9N(C_2H_4OH)_2$ | 5.12 |
| Butyl diethylene glycol | 6.67 |
| Water | balance |
| Base/acid equivalent ratio | 0.77 |

| Cooling lubricant 16 | |
|---|---|
| Component: | Content, % by weight: |
| Lauric acid | 5.69 |
| $C_4H_9N(C_2H_4OH)_2$ | 3.55 |
| Butyl diethylene glycol | 4.63 |
| $C_{12-14}H_{25-29}OH$ | 1.13 |
| Water | balance |
| Base/acid equivalent ratio | 0.78 |

| Cooling lubricant 17 | |
|---|---|
| Component: | Content, % by weight: |
| Pelargonic acid | 8.62 |
| $C_4H_9N(C_2H_4OH)_2$ | 6.38 |
| Butyl diethylene glycol | 3.00 |
| Water | balance |
| Base/acid ratio | 0.71 |

| Cooling lubricant 18 | |
|---|---|
| Component: | Content, % by weight: |
| Lauric acid | 9.0 |
| $C_4H_9N(C_2H_4OH)_2$ | 6.0 |
| Butyl diethylene glycol | 3.0 |
| Water | balance |
| Base/acid equivalent ratio | 0.79 |

| Cooling lubricant 19 | |
|---|---|
| Component: | Content, % by weight: |
| Decanoic acid | 8.6 |
| 2,2-Dimethylamino methyl propanol | 3.6 |
| Butyl diethylene glycol | 7.0 |
| Water | balance |
| Base/acid ratio | 0.61 |

| Cooling lubricant 20 | Content, % by weight: |
|---|---|
| Palmitic acid | 7.06 |
| 2,2-Dimethylamino methyl propanol | 3.06 |
| Pelargonic acid | 1.00 |
| $C_4H_9N(C_2H_4OH)_2$ | 1.00 |
| $C_{12-14}H_{24-29}OH$ | 0.53 |
| Butyl diethylene glycol | 0.31 |
| Base/acid equivalent ratio | 0.93 |

For comparison, the following cooling lubricants were prepared. They all were in the form of an emulsion within the entire temperature range 20–70°C. The cooling lubricants A, B and Care in accordance with US Patent Specification 4 243 537, while the cooling lubricants D and E are formulated in accordence with EP Patent Application 115 926.

| Cooling lubricant A | |
|---|---|
| Component: | Content, % by weight: |
| Oleic acid | 2 |
| Triethanol amine | 1 |
| Polyalkylene glycol (UCON 5HB 100) | 10 |
| Water | balance |
| Base/Acid equivalent ratio | 0.95 |

| Cooling lubricant B | |
|---|---|
| Component: | Content, % by weight: |
| Oleic acid | 2 |
| Triethanol amine | 1 |
| Polyalkylene glycol (UCON 5HB 100) | 10 |
| $C_9H_{19}\overset{O}{C}O(C_2H_4O)_3\overset{O}{C}C_7H_{15}$ | 3 |
| Water | balance |
| Base/acid equivalent ratio | 0.95 |

| Cooling lubricant C | |
|---|---|
| Component: | Content, % by weight: |
| Oleic acid | 2.0 |
| Triethanol amine | 1.6 |
| Polyalkylene glycol (UCON 5HB 100) | 10 |
| Water | balance |
| Base/acid equivalent ratio | 1.5 |

| Cooling lubricant D | |
|---|---|
| Component: | Content, % by weight: |
| Lauric acid | 1.5 |
| Diethanol amine | 1.5 |
| Polyalkylene glycol (Pluronic 17R2) | 10 |
| $C_9H_{19}\overset{O}{C}O(C_2H_4O)_3\overset{O}{C}C_7H_{15}$ | 1.0 |
| Water | balance |
| Base/acid equivalent ratio | 1.9 |

| Cooling lubricant E | |
|---|---|
| Component: | Content, % by weight: |
| Oleic acid | 1.0 |
| Triethanol amine | 0.8 |
| Polyalkylene glycol (Pluronic 17R2) | 5.0 |
| Water | balance |
| Base/acid equivalent ratio | 1.5 |

| Cooling lubricant | Force kN | Annealing residues | Iron corrosion | White rust % | Physical appearance |
|---|---|---|---|---|---|
| A | 13.3 | 5 | 5 | 20 | 1 |
| B | 13.5 | 8 | 4 | 6 | 1 |
| C | 14.0 | 8 | 0.1 | 12 | 1 |
| D | 16.5 | 5 | 0 | 0 | 1 |
| E | 14.5 | 5 | 4 | 30 | 1 |
| 1 | 14.7 | 1 | 1 | 0 | 0 |
| 2 | 14.3 | 2 | 0 | 0 | 0 |
| 3 | 14.3 | 3 | 0 | 0 | 0 |
| 4 | 14.4 | 2 | 0 | 0 | 0 |
| 5 | 13.2 | 3 | 0 | 0 | 0 |
| 6 | 13.4 | 3 | 0 | 0 | 0 |
| 7 | 13.5 | 2 | 0 | 0 | 0 |
| 8 | 14.0 | 3 | 0 | 0 | 0 |
| 9 | 13.4 | 2 | 0 | 0 | 0 |
| 10 | 13.5 | 3 | 0 | 1 | 0 |
| 11 | 12.5 | 2 | 0 | 5 | 0 |
| 12 | 13.0 | 3 | 0 | 4 | 0 |
| 13 | 14.5 | 1 | 0 | 0 | 0 |
| 14 | 14.5 | 1 | 0 | 0 | 0 |
| 15 | 13.1 | 3 | 0 | 0 | 0 |
| 16 | 13.5 | 2 | 0 | 0 | 0 |
| 17 | 13.2 | 2 | 0 | 0 | 0 |
| 18 | 13.2 | 2 | 0 | 0 | 0 |
| 19 | 13.0 | 1 | 0 | 0 | 0 |
| 20 | 14.1 | 2 | 0 | 2 | 0 |

As will be evident from there results, the cooling lubricants according to the invention provide, as compared with prior art technique, rolled aluminium surfaces having a far better physical appearance. Iron corrosion and white rust are maintained simultaneously at a very low level which, in general, is even essentially lower than for the cooling lubricants of the comparison compositions. In addition, the cooling lubricants according to the invention give a low level of annealing residues, which in all cases are essentially lower than in the comparison test.

## Claims

1. A method in the mechanical working of aluminium and aluminium alloys, in the presence of a water-based cooling lubricant containing lubricating and corrosion inhibiting agents, characterised in that the cooling lubricant at least at a temperature within the range 20–70°C is present in the form of a stable solution, and that it contains, as lubricating and corrosion inhibiting agents, a combination of (a) a carboxyl compound having the formula $R_1COOH$, in which Rl is hydrophobic group having 7-22 carbon atoms, (b) a tertiary alkylalkanolamine having a molecular weight of less than 300, and (c) a water soluble organic solubiliser having a molecular weight of less than 400 and a maximum hydrocarbon group of 6 carbon atoms, the base/acid equivalent ratio between the amine and the carboxyl compound being less than 1.0, preferably less than 0.9.

2. A method as claimed in claim 1, characterised in that the cooling lubricant further contains (d) a polar, essentially hydrophobic, nonionic compound.

3. A method as claimed in claim 2, characterised in that the compound (d) has the formula $R_5(B)_mOR_6$, wherein $R_5$ is a hydrocarbon or acyl group having 8–24 carbon atoms, B represents an oxyalkylene group having 2–4 carbon atoms, $R_6$ is hydrogen, an alkyl or acyl group having 1–4 carbon atoms, and m is an integer from 0 to 4.

4. A method as claimed in any one of claims 1–3, characterised in that the tertiary alkylalkanolamine (b) has the formula $R_2R_3R_4N$, wherein $R_2$ is a hydroxylalkyl group having 1–4 carbons atoms or a group hav-

ing the formula $(A)_nH$, wherein A is an alkyleneoxy group having 2–4 carbon atoms, n is an integer from 1 to 3, $R_3$ is an alkyl group having 1–6 carbon atoms, and $R_4$ represents a group having the same meaning as $R_2$ or $R_3$.

5. A method as claimed in claims 1–4, characterised in that the hydrophobic group $R_1$ of the carboxyl compound (a) is an aliphatic hydrocarbon group.

6. A method as claimed in claims 1–5, characterised in that the base/acid equivalent ratio between the alkanol amine and the carboxyl compound is from 0.5 up to 0.8.

7. A method as claimed in claims 1–6, characterised in that the cooling lubricant contains the carboxyl compound (a) in a content of 0.5–25, preferably 2–15% by weight, the tertiary alkylalkanolamine (b) in a content of 0.1–20, preferably 1–15% by weight, and the solubiliser (c) in a content of 0.5–33, preferably 1–18% by weight.

8. A method as claimed in claims 3–7, characterised in that the cooling lubricant contains the nonionic compound (d) in a content of at most 10, preferably 0.2–10% by weight.

9. A concentrate which, after dilution with water, is suitable for use in the method as claimed in claims 1–8, characterised in that it has the following composition:

| Component | Content, % by weight |
|---|---|
| The carboxyl compound (a) | 15–75, preferably 25–75 |
| The alkanol amine (b) | 3–60, preferably 10–60 |
| The solubiliser (c) | 10–87, preferably 10–68 |
| The nonionic compound (d) | 0–30, preferably 2–30 |
| Conventional additives, such as bactericidal agents, perfumes, viscosity controlling agents etc. | 0–35, preferably 0–15 |
| Water | 0–72, preferably 0–58 |

## Patentansprüche

1. Verfahren zur mechanischen Bearbeitung von Aluminium und Aluminiumlegierungen in Gegenwart eines kühlenden Schmiermittels auf Wasserbasis, welches schmierende und korrosionshemmende Mittel enthält, dadurch gekennzeichnet, daß das kühlende Schmiermittel zumindest bei einer Temperatur im Bereich von 20 bis 70°C in Form einer stabilen Lösung vorhanden ist, und daß es als schmierende und korrosionshemmende Mittel eine Kombination von (a) einer Carboxylverbindung der Formel $R_1COOH$, worin $R_1$ eine hydrophobe Gruppe mit 7 bis 22 Kohlenstoffatomen darstellt, (b) ein tertiäres Alkylalkanolamin mit einem Molekulargewicht von weniger als 300 und (c) einem wasserlöslichen organischen Lösungsvermittler mit einem Molekulargewicht von weniger als 400 und einer maximalen Kohlenwasserstoffgruppe von 6 Kohlenstoffatomen enthält, wobei das Base/Säure-Äquivalentverhältnis zwischen dem Amin und der Carboxylverbindung weniger als 1,0 beträgt, vorzugsweise weniger als 0,9.

2. Verfahren nach Anspruch 1, dadurch gekennzeichnet, daß das kühlende Schmiermittel weiterhin (d) eine polare, im wesentlichen hydrophobe, nicht-ionische Verbindung enthält.

3. Verfahren nach Anspruch 2, dadurch gekennzeichnet, daß die Verbindung (d) die Formel $R_5(B)_mOR_6$ besitzt, worin $R_5$ eine Kohlenwasserstoff- oder Acylgruppe mit 8 bis 24 Kohlenstoffatomen ist, B für eine Oxyalkylengruppe mit 2 bis 4 Kohlenstoffatomen steht, $R_6$ Wasserstoff, eine Alkyl- oder Acylgruppe mit 1 bis 4 Kohlenstoffatomen darstellt und m eine ganze Zahl von 0 bis 4 ist.

4. Verfahren nach irgendeinem der Ansprüche 1 bis 3, dadurch gekennzeichnet, daß das tertiäre Alkylalkanolamin (b) die Formel $R_2R_3R_4N$ hat, worin $R_2$ eine Hydroxyalkylgruppe mit 1 bis 4 Kohlenstoffatomen oder eine Gruppe der Formel $(A)_nH$ ist, worin A eine Alkylenoxygruppe mit 2 bis 4 Kohlenstoffatomen darstellt, n eine ganze Zahl von 1 bis 3 ist, $R_3$ eine Alkylgruppe mit 1 bis 6 Kohlenstoffatomen ist und $R_4$ für eine Gruppe steht, die wie $R_2$ oder $R_3$ definiert ist.

5. Verfahren nach Anspruch 1 bis 4, dadurch gekennzeichnet, daß die hydrophobe Gruppe $R_1$ der Carboxylverbindung (a) eine aliphatische Kohlenwassserstoffgruppe ist.

6. Verfahren nach Anspruch 1 bis 5, dadurch gekennzeichnet, daß das Base-Säure-Äquivalentverhältnis zwischen dem Alkanolamin und der Carboxylverbindung 0.5 bis 0.8 beträgt.

7. Verfahren nach Anspruch 1 bis 6, dadurch gekennzeichnet, daß das kühlende Schmiermittel die Carboxylverbindung (a) in einem Gehalt von 0,5 bis 25, vorzugsweise 2 bis 15 Gewichtsprozent enthält, das tertiäre Alkylalkanolamin (b) in einem Gehalt von 0,1 bis 20, vorzugsweise 1 bis 15 Gewichtsprozent, und den Lösungsvermittler (c) in einem Gehalt von 0,5 bis 33, vorzugsweise 1 bis 18 Gewichtsprozent enthält.

8. Verfahren nach Anspruch 3 bis 7, dadurch gekennzeichnet, daß das kühlende Schmiermittel die nicht-ionische Verbindung (d) in einem Gehalt von höchstens 10, vorzugsweise 0,2 bis 10 Gewichtsprozent enthält.

9. Konzentrat, welches nach Verdünnung mit Wasser geeignet ist zur Verwendung im Verfahren nach Anspruch 1 bis 8, dadurch gekennzeichnet, daß es die folgende Zusammensetzung hat:

| Bestandteile: | Gehalt in Gewichtsprozent: |
|---|---|
| Carboxylverbindung (a) | 15–75, vorzugsweise 25–75 |
| Alkanolamin (b) | 3–60, vorzugsweise 10–60 |
| Lösungsvermittler (c) | 10–87, vorzugsweise 10–68 |
| Nicht-ionische Verbindung (d) | 0–30, vorzugsweise 2–30 |
| Übliche Zusätze wie z.B. Bakterizide, Duftstoffe, Viskositätsregler, etc. | 0–35, vorzugsweise 0–15 |
| Wasser | 0–72, vorzugsweise 0–58 |

## Revendications

1. Procédé de traitement mécanique de l'aluminium et des alliages d'aluminium, en présence d'un lubrifiant réfrigérant à base d'eau contenant des agents lubrifiants et inhibiteurs de corrosion, caractérisé en ce que le lubrifiant réfrigérant au moins à une température située dans un intervalle de 20–70°C est présent sous la forme d'une solution stable, et en ce qu'il contient, comme agents lubrifiants et inhibiteurs de corrosion, une combinaison de (a) un composé carboxyle de formule $R_1COOH$, où $R_1$ est un groupe hydrophobe ayant 7–22 atomes de carbone, (b) une alkyl-alcanol-amine tertiaire ayant un poids moléculaire inférieur à 300, et (c) un agent de solubilisation organique soluble dans l'eau ayant un poids moléculaire inférieur à 400 et un groupe hydrocarboné maximum de 6 atomes de carbone, le rapport équivalent base/acide entre l'amine et le composé carboxyle étant inférieur à 1,0, de préférence inférieur à 0,9.

2. Procédé selon la revendication 1, caractérisé en ce que le lubrifiant réfrigérant contient en outre (d) un composé non-ionique polaire, essentiellement hydrophobe.

3. Procédé selon la revendication 2, caractérisé en ce que le composé (d) est de formule $R_5(B)_mOR_6$, où $R_5$ est un groupe hydrocarboné ou acyle ayant de 8 à 24 atomes de carbone, B représente un groupe oxyalkylène ayant de 2 à 4 atomes de carbone, $R_6$ est un hydrogène, un groupe alkyle ou acyle ayant de 1 à 4 atomes de carbone, et m est un nombre entier allant de 0 à 4.

4. Procédé selon l'une quelconque des revendications 1–3, caractérisé en ce que l'alkyl-alcanol-amine tertiaire (b) est de formule $R_2R_3R_4N$, où $R_2$ est un groupe hydroxyalkyle ayant de 1 à 4 atomes de carbone ou un groupe de formule $(A)_nH$, où A est un groupe alkylèneoxy ayant de 2 à 4 atomes de carbone, n est un nombre entier allant de 1 à 3, $R_3$ est un groupe alkyle ayant de 1 à 6 atomes de carbone, et $R_4$ représente un groupe ayant la même signification que $R_2$ ou $R_3$.

5. Procédé selon les revendications 1–4, caractérisé en ce que le groupe hydrophobe $R_1$ du composé carboxyle (a) est un groupe hydrocarboné aliphatique.

6. Procédé selon les revendications 1–5, caractérisé en ce que le rapport équivalent base/acide entre l'alcanol-amine et le composé carboxyle est de 0,5 à 0,8.

7. Procédé selon les revendications 1–6, caractérisé en ce que le lubrifiant réfrigérant contient le composé carboxyle (a) en une teneur de 0,5–25%, de préférence 2–15% en poids, l'alkyl-alcanol-amine tertiaire (b) en une teneur de 0,1–20, de préférence 1–15% en poids, et l'agent de solubilisation (c) en une teneur de 0,5–33%, de préférence 1–18 en poids.

8. Procédé selon les revendications 3–7, caractérisé en ce que le lubrifiant réfrigérant contient le composé non-ionique (d) en une teneur d'au plus 10, de préférence de 0,2–10% en poids.

9. Concentré qui, après dilution avec de l'eau, convient pour application dans le procédé selon les revendications 1–8, caractérisé en ce qu'il a la composition suivante:

| Composant | Teneur, % pond. |
|---|---|
| Comp. carboxyle (a) | 15–75, de préf. 25–75 |
| Alcanol-amine (b) | 3–60, de préf. 10–60 |
| Agent de solubilisation (c) | 10–87, de préf. 10–68 |
| Comp. non-ionique (d) | 0–30, de préf. 2–30 |
| Add. class. comme ag. bactéricides, parfums, ag. de régul. de viscosité &c | 0–35, de préf. 0–15 |
| Eau | 0–72, de préf. 0–58 |